Europäisches Patentamt

European Patent Office

Office européen des brevets

(11) Veröffentlichungsnummer: **0 144 511**
**A1**

## (12) EUROPÄISCHE PATENTANMELDUNG

(21) Anmeldenummer: **84108604.4**

(22) Anmeldetag: **20.07.84**

(51) Int. Cl.⁴: **B 29 C 67/20**
**E 04 B 2/86**
**//B29K105:04**

(30) Priorität: **11.08.83 CH 4382/83**

(43) Veröffentlichungstag der Anmeldung:
**19.06.85 Patentblatt 85/25**

(84) Benannte Vertragsstaaten:
**BE CH DE FR GB IT LI LU NL SE**

(71) Anmelder: **LONZA AG**

**Gampel/Wallis(CH)**

(72) Erfinder: **Baumann, Hansjörg Walter**
**Bahnhofstrasse**
**Mühlau Kanton Aargau(CH)**

(74) Vertreter: **von Füner, Alexander, Dr. et al,**
**Patentanwälte v. Füner, Ebbinghaus, Finck Mariahilfplatz**
**2 & 3 Postfach 95 01 60**
**D-8000 München 95(DE)**

(54) **Verfahren zur Herstellung von Formstücken aus mit Bindemittel gebundenen Granulaten aus zähharten, geschlossenzelligen Schaumstoffen.**

㊱ Zur Herstellung von Formstücken werden zähharte, geschlossenzellige Schaumstoffgranulate mit einer Korngröße von 10 bis 20 mm mit einem mittel- bis leichtviskosen Bindemittel gemischt, wobei ein Volumsverhältnis Hartschaumgranulat zu Bindemittel von 55 zu 1 bis 45 zu 1 gewählt wird, und diese Mischung in einer Druckform bei Temperaturen von 60 bis 80°C und unter einem Anfangsdruck von 5 bis 8 bar ausgehärtet. Als Bindemittel kann ein ungesättigtes Polyesterharz verwendet werden.

EP 0 144 511 A1

**0144511**

<u>Verfahren zur Herstellung von Formstücken aus mit Bindemittel</u>
<u>gebundenen Granulaten aus zähharten, geschlossenzelligen</u>
<u>Schaumstoffen</u>

Die vorliegende Erfindung betrifft ein Verfahren zur Herstellung von Formstücken aus mit Bindemittel gebundenen Granulaten aus zähharten, geschlossenzelligen Schaumstoffen.

Solche erfindungsgemässe Formstücke besitzen eine gute Schlag- und Stossfestigkeit und Dämpfung und eignen sich, insbesondere in Form von Stäben, als Distanzstücke und Montageköpfe für den Betonbau. Da diese Produkte wegen ihrer Zähelastizität zudem gut nagelbar sind, können sie zeit- und arbeitssparend in der Direktmontage eingesetzt werden. Sie sind sickerwasserundurchlässig, verrotten nicht und sind hydrolysefest.

Die Formstücke der vorliegenden Erfindung werden so hergestellt, dass man zähharte, geschlossenzellige Schaumstoffgranulate mit einer Korngrösse von 10 bis 20 mm mit einem mittel- bis leichtviskosen Bindemittel, wobei ein Volumenverhältnis Granulat zu Bindemittel von 55 zu 1 bis 45 zu 1 gewählt wird, mischt und bei Temperaturen von 60 bis 80°C und unter einem Anfangsdruck von 5 bis 8 bar aushärtet.

Als zähharte, geschlossenzellige Schaumstoffgranulate kommen vorzugsweise solche aus Polyvinylchlorid zur Anwendung, doch können auch solche aus anderen zähelastischen Materialien, wie z.B. Polyolefine etc. verwendet werden.

Als Bindemittel werden mittel- bis leichtviskose, in der Wärme oder bei Raumtemperatur aushärtbare Harze eingesetzt. Solche sind Polyurethane, Epoxidharze, Polymethacrylharze. Vorzugsweise werden aber ungesättigte Polyesterharze eingesetzt.

Der Mischung aus Hartschaumstoffgranulat und Bindemittel können anorganische Füllstoffe oder Pigmente, z.B. Glas- oder Asbestfasern, Zement, Calciumcarbonate, Bauxit, Oker etc., zugesetzt werden. Diese Zusätze dienen zur Farbgebung und zur Verbesserung der Haftung an Beton oder Mörtel. Durch die Wahl der Verdichtung (angewendeter Druck) bei der Aushärtung und der Grösse des Granulates kann das spezifische Gewicht des fertigen Formkörpers eingestellt werden. Wird ein Druck von 6 bar und eine Korngrösse von 10 bis 15 mm angewendet, werden Produkte mit einer Rohdichte von 580 bis 590 kg/m3 erzielt.

Beim Druck handelt es sich um den Anfangsdruck, der bei der Aushärtung eingestellt wird. Während der Härtung reduziert sich der Druck selbstverständlich.

Die Aushärtung wird zweckmässig in Stempelpressen durchgeführt. Die Presse wird dabei vorteilhaft mit einem Trennmittel eingekleidet, das die Entnahme des Produktes erleichtert.

- 3 -

0144511

## Patentansprüche

1. Verfahren zur Herstellung von Formstücken aus mit Bindemittel gebundenen Granulaten aus zähharten, geschlossenzelligen Schaumstoffen, dadurch gekennzeichnet, dass man zähharte, geschlossenzellige Schaumstoffgranulate mit einer Korngrösse von 10 bis 20 mm mit einem mittel- bis leichtviskosen Bindemittel, wobei ein Volumenverhältnis Hartschaumgranulat zu Bindemittel von 55 zu 1 bis 45 zu 1 gewählt wird, mischt und diese Mischung in einer Druckform bei Temperaturen von 60 bis 80°C und unter einem Anfangsdruck von 5 bis 8 bar aushärtet.

2. Verfahren nach Patentanspruch 1, dadurch gekennzeichnet, dass man als Bindemittel ein ungesättigtes Polyesterharz verwendet.

3. Verwendung der Formstücke gemäss Patentanspruch 1 als Distanzstäbe und Distanzprofile im Betonbau.

**0144511**
Nummer der Anmeldung

# EUROPÄISCHER RECHERCHENBERICHT

Europäisches
Patentamt

| | EINSCHLÄGIGE DOKUMENTE | | EP 84108604.4 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| A | <u>DE – A1 – 2 331 301</u> (BASF) <br> * Gesamt * | 1,2 | B 29 C   67/20 <br> E 04 B     2/86 <br> // B 29 K 105:04 | |
| A | <u>EP – A2 – 0 073 899</u> (CHEMISCHE WERKE HÜLS AG) <br> * Gesamt * | 1,2 | | |
| A | <u>DD – A – 66 279</u> (TRAUTVETTER) <br> * Gesamt * | 1 | | |
| A | <u>DE – A – 1 629 273</u> (BASF) <br> * Gesamt * | 1 | | |
| | | | RECHERCHIERTE SACHGEBIETE (Int. Cl.4) | |
| | | | B 29 C <br> C 08 J <br> E 04 B | |

Der vorliegende Recherchenbericht wurde für alle Patentansprüche erstellt.

| Recherchenort | Abschlußdatum der Recherche | Prüfer |
|---|---|---|
| WIEN | 29-01-1985 | MAYER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82